# EUROPÄISCHE PATENTSCHRIFT

(11) **EP 1 304 210 B1**
(45) Veröffentlichungstag und Bekanntmachung des Hinweises auf die Patenterteilung: **30.05.2007**
(21) Anmeldenummer: 02021519.0
(22) Anmeldetag: 26.09.2002
(51) Int. Cl.: B29C 67/24, B29C 33/60, C08K 5/11

(54) **Verwendung von Prozesshilfsmitteln für die Verarbeitung von Kunststoffmassen**
Use of processing aids for the conversion of plastics
Utilisation d'additifs de traitement pour la conversion de matières plastiques

(30) Priorität: 19.10.2001 DE 10152716
(43) Veröffentlichungstag der Anmeldung: 23.04.2003
(73) Patentinhaber: Byk-Chemie GmbH, 46483 Wesel (DE)
(72) Erfinder: Pritschins, Wolfgang, Dr., 46487 Wesel (DE); Gertzen, Bärbel, 46446 Emmerich (DE); Esser, Andrea, 46485 Wesel (DE); Haubennestel, Karlheinz, 46487 Wesel (DE)
(74) Vertreter: Leifert & Steffan

(56) Entgegenhaltungen:
- EP-A- 0 551 818
- EP-A- 0 926 173
- FR-A- 2 502 162
- GB-A- 1 471 313
- US-A- 3 736 289
- US-A- 3 857 865
- US-A- 3 875 069
- US-A- 4 192 930
- US-A- 4 632 770
- US-A- 4 661 163
- US-A- 4 868 224
- US-A- 5 500 176
- US-A- 5 670 553
- US-A- 5 688 750
- US-A- 5 707 945

## Beschreibung

Gegenstand dieser Erfindung sind die Verwendung von Prozesshilfsmitteln für die Verarbeitung von Kunststoffmassen auf der Basis von Carbonsäureestern zur Verbesserung der Oberflächengüte, wie Glätte und Glanz, der Überlackierbarkeit und der Homogenität von pigmentierten und / oder gefüllten Kunststoffmassen, sowie die Kunststoffmassen. Neben diesen Eigenschaften wirken die erfindungsgemäßen Prozesshilfsmittel stabilisierend auf Mischungen unverträglicher Polymere und verbessern die Fließeigenschaften dieser Kunststoffmassen.

Prozesshilfsmittel (Verarbeitungshilfsmittel) sind, obwohl sie nur in relativ geringen Mengen benötigt werden, wichtige Zusatzstoffe, ohne die manche Kunststoffe nur schwierig verarbeitbar und gewisse Verformungsprozesse überhaupt nicht durchführbar wären. Sie werden für die meisten thermoplastischen Kunststoffe und Duroplaste (härtbare Formmassen) verwendet und spielen eine entscheidende Rolle, um Ausstoßleistungen von Produktionsmaschinen zu steigern, Fertigerzeugnisse in ihrer Qualität zu verbessern und neue Verarbeitungstechnologien zu ermöglichen.
Prozesshilfsmittel werden eingesetzt zur Verbesserung des Fliessverhaltens und der Fließfähigkeit der Kunststoffe, zur Verbesserung der Homogenität und Stabilität von gefüllten und ungefüllten Kunststoffmischungen und Kunststoffschmelzen, zur Verbesserung der Oberflächengüte und zur Verringerung der Adhäsion der Schmelzen oder Mischungen an Maschinenteilen und daraus resultierend verbesserten Formtrenneigenschaften.

Generell lassen sich im Zusammenwirken mit Kunststoffen folgende Forderungen für Prozesshilfsmittel aufstellen:
- Die physikalischen Grundeigenschaften der Polymeren dürfen nicht beeinträchtigt werden. Andererseits sollen die anwendungstechnischen Eigenschaften der Fertigteile im gewünschten Sinn beeinflusst werden. Zu diesen Eigenschaften zählen z.B. Oberflächenglätte, Glanz, Transparenz, Bedruckbarkeit, Verschweißbarkeit, Klebrigkeit, sowie Gleit- und Blockverhalten.
- Die Haftung der Kunststoffmassen und -schmelzen an Maschinenteilen und Werkzeugteilen und die daraus resultierende Zersetzung des Polymeren dürfen auf keinen Fall stärker werden. Antiadhäsive Eigenschaften sind für Prozesshilfsmittel wünschenswert.
- Das rheologische Verhalten der Kunststoffe - vom Pulvereinzug bis zur Schmelze, - und des Kunststoff-Compounds sollte sich optimal einstellen lassen, um homogene, plastifizierte Kunststoffschmelzen und / oder homogene Kunststoff-Compounds zu erhalten.

Eine Übersicht über Prozesshilfsmittel und deren Verwendungsmöglichkeiten finden sich beispielsweise in:
Hans Batzer, "Polymere Werkstoffe, Band II - Technologie 1, Georg Thieme Verlag Stuttgart, 1984-Seite 328 ff", sowie in
Gächter / Müller, "Kunststoff-Additive, 3.Ausgabe, Carl Hanser-Verlag, 1989, Seite 441-502".

**Tabelle 1 : Prozesshilfsmittel und deren Anwendungen:**

| **Verbindungsklasse** | **Anwendungen** |
|---|---|
| Kohlenwasserstoffe z.B. Paraffinöl - Polyethylenwachse | Gleit-Trennmittel für Hart- und Weich- PVC, PS, PA und UP 0,1 -1,0% |
| | z.B.: höherer Oberflächenglanz z.B. in PE Einsatzmenge bis 5% |
| Alkohole z.B. Palmityl-, Stearyl-, Talgfettalkohol | Extrusion, Spritzguss, Kalander - von Hart- und Weich- PVC |
| | (Menge: 0,5-1,0%) |
| | Verbesserung von Fließfähigkeit, innere Gleitwirkung, gut verträglich, Transparenz |
| Ketone z.B. Stearon | PO-Schlauchfolien als Slipmittel, verringerte Haftung der Folien an Maschinenrollen |
| Carbonsäuren z.B. Stearinsäuren, oxidierte Polyethylen-Wachse | Verarbeitung von Hart- und Weich- PVC, PS, CA, MF, und Kautschuk-Compounds |
| Metallsalze der Carbonsäuren z.B. Ca-,Zn-stearate | Verarbeitung von Weich-PVC, PO, PS, ABS, PF und MF. Je nach Typ unterschiedliche Gleitwirkung, Beeinflussung Aufschmelzverhalten von PVC, oft Verwendung als Costabilisatoren |
| Carbonsäureamide z.B. Fettsäuremonoamide, Fettsäurediamide | Slipmittel; Antiblockmittel für PO Gleitmittel, Slipmittel bei PVC, PS, PO-Verarbeitung |
| Carbonsäureester z.B. Fettsäureester, Ester von Polycarbonsäuren | Gleitmittel für Hart- und Weich-PVC, PS, PA und MF, Processing aid für Extrusion, Kalandrierung, Blas- und Vakuumformung von PVC |

Die in der Tabelle verwendeten Abkürzungen haben folgende Bedeutung:
- PVC: = Polyvinylchlorid
- PS: = Polystyrol
- CA: = Celluloseacetat
- MF: = Melamin/Formaldehyd-Harz
- PO: = Polyolefin
- ABS: = Acrylnitril/Butadien/Styrol-Copolymer
- PF: = Phenol/Formaldehyd-Harz
- PA: = Polyamid
- UP: = ungesättigtes Polyesterharz
- PE: = Polyethylen

Trotz der Vielzahl der beschriebenen Prozesshilfsmittel kommt es immer wieder zu Problemen bei der Anwendung dieser Stoffe in den verschiedenen Kunststoffmassen.
Generell ist bekannt, dass manche Prozesshilfsmittel bei Raumtemperatur an die Oberfläche gefertigter Teile wandern und somit deren Aussehen beeinträchtigen oder auch durch ihre Flüchtigkeit zu unerwünschten Emissionen führen. So kann sich z.B. Stearinsäure auf der Oberfläche von Weich-PVC als unerwünschter weißer Belag abscheiden (Ausblühen, blooming-out).

Auch raffinierte Kohlenwasserstoffe, die bei der Herstellung von schlagzähem PVC als Gleitmittel verwendet werden, scheiden sich bei Raumtemperatur auf der Oberfläche ab und verleihen dem Kunststoff ein fettiges und trübes Aussehen.
Bei der Verwendung von Metallsalzen, wie z.B. Zinkstearat, besonders in hitzehärtbaren Kunststoffmassen, kommt es zu Problemen, da die Fertigteile zu Emissionen dieser Metallsalze neigen. Weiterhin führen diese Metallsalze zu Haftungsproblemen bei der Überlackierung der Fertigteile. Diese Haftungsprobleme machen zusätzliche Maßnahmen, wie z.B. eine Alkalibehandlung (power wash), erforderlich, um eine verbesserte Lackierbarkeit des Fertigteiles zu erreichen. Dieses ist ein zusätzlicher, unerwünschter Arbeitsschritt, der zudem auch ökologisch bedenklich ist.
Beeinflussungen treten ebenfalls zwischen Verarbeitungshilfsmitteln und bestimmten Komponenten auf, wenn z.B. deren Löslichkeitsgrenze überschritten wird. Dies führt bei gewissen Farbstoffen, Pigmenten, Stabilisatoren und Füllstoffen zum sogenannten "plate-out". Dieses Phänomen tritt besonders bei kurzkettigen Fettsäureestern auf.
Bei Anwendungen in Polyolefinthermoplasten kann es zu Wechselwirkungen mit Stabilisatoren, Lichtschutzmitteln und Antioxidantien kommen, so dass es bei der Verarbeitung in den Maschinen zu Störungen und bei den Fertigprodukten zu Stabilitätseinbußen kommen kann.

In US-PS 4 210 571 und 4 210 572 werden Haftvermittler (coupling agents) zur Behandlung von Füllstoffen für hitzehärtbare Harze auf der Basis von Carbonsäureesterderivaten von Mono-, Di- und Trihydroxyfettsäureestern, von ein- oder mehrwertigen Alkoholen mit 1 bis 4 C-Atomen und deren Verwendung beschrieben. Diese Haftvermittler stellen eine Klebeverbindung zwischen dem Füllstoff und dem Harz her. Eine Verwendung als Prozesshilfsmittel wird nicht beschrieben.

In EP 0 22 977 B1 (DE 36 50 587 T2, US 4,622,354) ist die Herstellung einer härtbaren, phasenstabilisierten Polyesterformmasse beschrieben. Bei vielen härtbaren Formassen, wie z.B. bei Polyesterharzen ergibt sich das Problem, dass die einzelnen Bestandteile des Polyesterharzes nicht miteinander mischbar sind. Im Verarbeitungsprozess haben daher die Komponenten die Tendenz zur Phasenseparation. Durch die Verwendung von Fettsäuren mit 5 bis 28 C-Atomen wird gemäß dem obengenannten Patent die Tendenz zur Phasenseparation verringert. Nachteilig ist hier, dass die beschriebenen Fettsäuren mit dem Zusatzstoff MgO reagieren und diesen Zusatzstoff so seiner eigentlichen Verwendung (Einstellung der Endverarbeitungsviskosität) entziehen.
Die US-PS 4 172 059 beschreibt eine härtbare Formmasse aus einem ungesättigten Polyesterharz, oder einem endständig ungesättigten Vinylesterharz, sowie Gemische der beiden Komponenten mit einem olefinisch ungesättigten copolymerisierbaren Monomer, einem Verdickungsmittel und einem Füllstoff, sowie wenigstens 0,4 Gew.-% eines viskositätssenkenden Prozesshilfsmittel. Dieses viskositätssenkende Prozesshilfsmittel besteht aus einer aliphatische Monocarbonsäure mit wenigstens 6 C-Atomen in der Kette.
Nachteilig ist auch hier, dass die beschriebenen Monocarbonsäuren mit dem Zusatzstoff (MgO), wie bereits oben dargestellt, reagieren

Die US 5,707,945 und die US 5,688,750 beschreiben Basisflüssigkeiten für hydraulische Flüssigkeiten bzw. Flüssigkeiten für die Metallbearbeitung umfassend Veresterungsprodukte bzw. ihre neutralen Salze aus polymerisierten Fettsäuren und einem alkoxylierten Mono-Alkohol, der ausgewählt ist aus der Gruppe (a) gradkettiger oder verzweigter gesättigter C₁-C₂₄-Monoalkohole, alkoxyliert mit 2-25 mol eines C₂-C₄-Alkylenoxids und (b) Alkoxy-Poly(alkylen)glykolen, in denen eine der zwei endständigen Hydroxylgruppen verethert ist mit einem aliphatischen C₁-C₄-Monoalkohol und die alkoxyliert mit 2-25 mol eines C₂-C₄-Alkylenoxids sind.

Die US 3,857,865 beschreibt Esterzusammensetzungen auf der Basis von Dicarbonsäuren mit hohem Molekulargewicht, Polyoxyalkylen-Glykolen und monofunktionellen Alkoholen als Schmiermittel.

In der US 4,192,930 sind formbare thermoplastische Zusammensetzungen beschrieben, die ein thermoplastisches Polymer und eine geringe, den Formprozess verbessernde Menge eines veresterten Olefin-Maleinsäureanhydrid-Copolymers umfassen. Das Copolymer enthält ein Olefin mit 2 bis etwa 24 Kohlenstoffatomen und Maleinsäureanhydrid und ist verestert mit einem monovalenten Alkohol mit 2 bis etwa 20 Kohlenstoffatomen. Das molare Verhältnis des Maleinsäureanhydrids zum Alkohol beträgt etwa 1:0,5 bis etwa 1:2. Somit sind 25 bis 100% der Carboxylgruppen verestert. Bevorzugt wiegt das Olefin-Maleinsäureanhydrid-Copolymer vor Veresterung gemittelt etwa 2000 bis etwa 60000.

Die EP 0 926 173 A1 beschreibt ein Verfahren zum Formen von Polyurethan, bei dem man in eine Form ein Gemisch einbringt, das wenigstens ein lsocyanatpräpolymer und wenigstens eine zur Reaktion mit dem Präpolymer befähigte organische Hydroxylverbindung enthält, und dem Gemisch ein internes Entformungsmittel zufügt, das aufgebaut ist aus einem Diester wenigstens einer Disäure und wenigstens einem Monoalkohol, wobei der Diester insgesamt 24 bis 52 Kohlenstoffatome umfasst und die zugesetzte Menge Diester 1 bis 5 Gew.-%, bezogen auf das Gesamtgewicht des zu formenden Gemisches, beträgt.

Resultierend aus der Problematik, dass trotz der Vielzahl der auf dem Markt befindlichen Prozesshilfsmittel sich keine Stoffe finden, die gleichermaßen die Oberflächengüte der Kunststoffmassen positiv beeinflussen, die Fließeigenschaften der Kunststoffmassen sowohl bei der Herstellung als auch bei der Verarbeitung günstig beeinflussen, als auch Parameter wie Überlackierbarkeit und Homogenität verbessern, stellte sich die Aufgabe Prozesshilfsmittel zu finden, die die oben aufgeführten Schwachpunkte nicht zeigen.
Aufgrund der gestiegenen ökologischen Anforderungen in Bezug auf eine möglichst kleine Migrations- und Emissionstendenz stellte sich weiterhin die Aufgabe Prozesshilfsmittel zu finden, die alle oben genannten Anforderungen erfüllen und die in der Endanwendung nicht zu Migrations- und Emissionserscheinungen (Fogging, Blooming) führen.

Überraschenderweise wurde gefunden, eine Verwendung von Partialestern gemäß dem Anspruch 1 die gestellte Aufgabe erfüllen.

Gegenstand der vorliegenden Erfindung sind daher die Verwendung von Partialestern als Prozesshilfsmittel bei der Verarbeitung von Kunststoffmassen, wobei die Partialester mindestens 18 C-Atome enthalten, ein zahlenmittleres Molekulargewicht von 300 bis 10000 aufweisen und durch die Umsetzung von gesättigten oder ungesättigten aliphatischen und/oder cycloaliphatischen Polycarbonsäuren oder deren Anhydriden mit gesättigten oder ungesättigten aliphatischen, cycloaliphatischen und/oder aromatischen Monoalkoholen und/oder Monoepoxiden herstellbar sind, wobei mindestens 10% und maximal 90% der Carboxylgruppen der Polycarbonsäuren umgesetzt sind und die Polycarbonsäuren oder deren Anhydride 8 bis 100 C-Atome enthalten und wobei der Anteil der Partialester an den Kunststoffmassen 0,05 bis 10 Gew.-% beträgt gemäß dem Anspruch 1 und Kunststoffmassen gemäß dem Anspruch 14.

Vorzugsweise sind 20-70%, besonders bevorzugt 25-60% der Carboxylgruppen der Polycarbonsäuren verestert.

Bevorzugt sind Polycarbonsäuren, die zwei bis vier Carbonsäuregruppen enthalten.

Ganz besonders bevorzugte Polycarbonsäuren sind die durch Polymerisation von ungesättigten Fettsäuren erhältlichen Dimer- oder Trimersäuren mit 30 bis 60 C-Atomen.

Die Partialester weisen vorzugsweise eine Säurezahl von mindestens 10 mg KOH/g auf.

Die verwendeten Monoalkohole und/oder Monoepoxide können Ethergruppen enthalten.

Die erfindungsgemäß zu verwendenden Partialester können sowohl in thermoplastischen Kunststoffmassen als auch in duroplastischen Kunststoffmassen, gemäß DIN 7724 eingesetzt werden.

Innerhalb der thermoplastischen Kunststoffmassen ist eine bevorzugte Anwendung der Partialester der Einsatz in Polyolefinen (wie z.B: Polypropylen, Polyethylen), Ethylen-Vinylacetat-Copolymeren, Polyamiden, Polycarbonaten, Polystyrolen, Polyethylenterephthalaten, Polyestern, Poly(meth)acrylaten und deren Mischungen.

Ein besonders bevorzugtes Anwendungsgebiet der Partialester ist ihr Einsatz in PVC, insbesondere Weich-PVC und Pasten-PVC.

Innerhalb der duroplastischen Kunststoffmassen ist eine bevorzugte Anwendung der Partialester der Einsatz in härtbaren (Meth)-Acrylatharzen, und Mischungen davon. Als (Meth)-Acrylatharze werden in diesem Zusammenhang Polymermassen bevorzugt, die beim Gießvorgang durch Polymerisation in Substanz erzeugt werden. Dabei wird zuerst, bei der Siedetemperatur des Monomeren, bis zu einem Umsatz von 10 bis 30% Polymer vorpolymerisiert. Der dabei gewonnene Sirup (PMMA ist im Monomeren löslich) wird dann in Kammern mit beweglichen Kammerwandungen in einem Wasserbad polymerisert (Kammerverfahren).
Eine weitere bevorzugte Anwendung ist der Einsatz der Partialester in Polyurethan-Systemen (PUR-Systemen). Innerhalb der verschiedenen PUR-Strukturtypen sind hier die vernetzten Polyether- und Polyester-Polyurethane gemeint.

Ein ganz besonders bevorzugtes Anwendungsgebiet der Partialester ist ihr Einsatz in ungesättigten Polyesterharzsystemen (UP). Diese sind Lösungen ungesättigter Polyester in einem Vinyl-Monomeren, meist Styrol. Ihre Aushärtung erfolgt durch vernetzende Copolymerisation des Vinylmonomeren mit den polymerisierbaren Doppelbindungen des Polyesters. Beschleunigte Harze enthalten bereits den für die Kalthärtung erforderlichen Beschleuniger.
Ganz besonders bevorzugte Verwendungen der Partialester in UP's, sind UP-Formassen, insbesondere SMC, BMC, DMC, TMC, LDMC.
Mit SMC bezeichnet man faserverstärkte Pressmassen in Plattenform (Sheet Moulding Compounds).
Mit BMC bezeichnet man trockene, teilweise sogar rieselfähige Granulate (Bulk Moulding Compounds).
Mit DMC bezeichnet man teigartige Pressmassen (Dough Moulding Compounds).
Mit TMC bezeichnet man verdickte Pressmassen (Thick Moulding Compounds).
Mit LDMC bezeichnet man faserverstärkte Pressemassen mit niedriger Dichte (Low Density Moulding Compounds).

Bei den SMC - Pressmassen können die erfindungsgemässen Partialester sowohl in LS (Low Shrink)- und LP (Low Profile)-Systeme eingesetzt werden.

Unter LP-Systemen versteht man Compounds, die zu einer weitgehenden Kompensation der Schwindung (Schrumpf) führen. LS-Systeme erreichen hinsichtlich der Schwindungskompensation die LP-Harze nicht, sind dafür jedoch wesentlich günstiger einfärbbar.

Die Verarbeitung der obengenannten Kunststoffmassen kann durch Spritzen, Pressen, Blasformen (Extrusionsblasen, Spritzblasen), Extrudieren, Beschichten/Streichen, Gießen, Kalandrieren (Schmelzwalzverfahren), Imprägnieren, Pultrusieren und Schäumen, erfolgen.

Bei der Verarbeitung der obengenannten Kunststoffmassen können Füllstoffe und Verstärkungsmittel, wie z.B. Kreide (CaCO₃) - natürliche und synthetische, Aluminiumtrihydrat (ATH), Kaolin, Talkum, Feldspat, Metalloxide, Quarzmehl, Gesteinsmehl, Wollastonit, Glimmer, Glasfasern und -kugeln; synthetische organische Stoffe (wie z.B. synthetische Fasern, Polyester, Polyamide, Aramide), Kohlenstoff-Fasern (C-Fasern); natürliche organische Stoffe (wie z.B. Holzmehl, Zellstoff), eingesetzt werden.

Die Erfindung betrifft auch Kunststoffmassen, die 0,05 bis 10 Gew.-% der erfindungsgemäßen Prozesshilfsmittel sowie gegebenenfalls zusätzlich die vorgenannten Füllstoffe und Hilfsmittel enthalten.

Im folgenden sollen zunächst verschiedene erfindungsgemäße thermoplastische Kunststoffmassen, nachfolgend verschiedene erfindungsgemäße duroplastische Kunststoffmassen beispielhaft vorgestellt werden.

### Kalandermassen (Kunststoffmassen zum Kalandrieren)

Thermoplaste, die einen ausgeprägten plastischen Bereich mit hoher Schmelzviskosität (ca. 10² bis 10³ Pa·s) besitzen, können mit Kalandern verarbeiten werden. Verfahren hierzu werden z.B. in "Polymere Werkstoffe- Band III, Technologie 2, von Hans Batzer, Georg Thieme Verlag, Stuttgart, Ausgabe 1984, Seite251ff" beschrieben. Die auf diese Art hergestellten Produkte, sind z.B. Fußbodenbeläge, Folien mit unterschiedlichster Anwendung aus Hart-, Halbhart-, und Weich- PVC.

Um ein Festkleben der Schmelze an den Metallflächen zu verhindern, werden oft innere Gleitmittel, wie z. B. Fettalkoholester von langen Fettsäuren (C₁₄- bis C₁₈) zugegeben. Sie verbessern den Massefluss, durch Verringerung der Reibung zwischen den PVC-Teilchen. Des weiteren werden äußere Gleitmittel, wie z.B. Paraffine und Wachse zu gesetzt, um die Trennung der Kalandermasse von den Walzen zu erleichtern. Häufig folgen dem Kalander Druckmaschinen oder Präge-Kalander (z.B. zur Herstellung von Dekor- Polster- und Täschner-Folien aus Weich-PVC).
Bedingt durch diese anschließende Weiterverarbeitung ist es sinnvoll, die bisher verwendeten inneren und äußeren Gleitmittel durch den erfindungsgemäßen Partialester zu ersetzen, um somit die Vorteile der besseren Überlackierbarkeit, bzw. Bedruckbarkeit zu nutzen.
Hierzu werden bei der Mischung, bzw. Dispergierung lediglich die inneren und äußeren Gleitmittel durch das erfindungsgemäße Prozesshilfsmittel ausgetauscht.

### Spritzgußmassen

Formmassen aus thermoplastischen Kunststoffen werden vorwiegend als Spritzgussmassen bezeichnet. Die Formmassen, bestehend aus polymerem Grundstoff und Zusatzstoffen, wie z.B. Füllstoffen oder Verstärkungsstoffen. In Spritzgussmassen werden vielfach Polymere mit niedrigeren Molekülmassen eingesetzt als in Extrusionsmassen, sie haben daher eine günstigere Schmelzviskosität und Fließfähigkeit. Bei Verwendung von Zusatzstoffen wie z.B. Fließ- und Gleitmitteln muss man jedoch stets deren Auswirkungen im Auge behalten; eine Herabsetzung der relativen Molekülmasse des Polymeren vermindert die mechanischen Eigenschaften, Gleitmittelzusätze senken z.B. auch die Erweichungstemperatur.
Weitere detaillierte Erklärungen zu den Zusatzstoffen in Spritzgussmassen, deren Verarbeitung und Aufbau findet man in "Polymere Werkstoffe- Band III, Technologie 2, von Hans Batzer, Georg Thieme Verlag, Stuttgart, Ausgabe 1984, Seite 204-221". Auch hier erweist es sich als sinnvoll, besonders bei der Verarbeitung von Hart-PVC, die bisher verwendeten inneren und äußeren Gleitmittel durch die erfindungsgemäßen Partialester zu ersetzen, um somit die Vorteile der besseren Überlackierbarkeit, bzw. Bedruckbarkeit zu nutzen.

Hierzu werden bei der Mischung, bzw. Dispergierung lediglich die inneren und äußeren Gleitmittel durch das erfindungsgemäße Prozesshilfsmittel ausgetauscht. Ebenso zeigt sich hier eine verbesserte Oberflächenqualität, hinsichtlich Glätte und Glanz, sowie ein zusätzlich Effekt in der Homogenisierung bei der Einfärbung. Dieser Effekt ist besonders für die Anwendungen, bei denen nicht lackiert werden soll von Vorteil.

### Extrusionsmassen

Analog zu den Spritzgussmassen werden für Extrusionsmassen vielfach Polymere mit höheren Molekülmassen eingesetzt als für Spritzgussmassen, also solche mit einer höheren Schmelzviskosität und Fließfähigkeit. Die höhere Schmelzviskosität der Extrusionsmassen bewirkt ein besseres Stehvermögen nach dem Austritt aus der Düse bis zum Kalibrierwerkzeug. Die höhere relative Molekülmasse und damit höhere Schmelzviskosität ist außerdem mit besseren mechanischen Werten verbunden, jedoch mit schwierigerer Verarbeitung im Spritzguss. Eine detaillierte Beschreibung findet man in "Polymere Werkstoffe- Band III, Technologie 2, von Hans Batzer, Georg Thieme Verlag, Stuttgart, Ausgabe 1984, Seite244ff". Auch hier erweist es sich als sinnvoll, besonders bei der Verarbeitung von PVC-Profilen und -Außenanwendungen, die bisher verwendeten inneren und äußeren Gleitmittel durch den erfindungsgemäßen Partialester zu ersetzen, um somit die Vorteile der besseren Überlackierbarkeit, bzw. Bedruckbarkeit zu nutzen.
Hierzu werden bei der Mischung, bzw. Dispergierung lediglich die inneren und äußeren Gleitmittel durch das erfindungsgemäße Prozesshilfsmittel ausgetauscht. Ebenso zeigt sich hier eine verbesserte Oberflächenqualität, hinsichtlich Glätte und Glanz, sowie ein zusätzlich Effekt in der Homogenisierung bei der Einfärbung. Dieser Effekt ist besonders für die Anwendungen, bei denen nicht lackiert werden soll von Vorteil.

Als Beispiele seien Fensterprofile genannt, die folgendermaßen aufgebaut sind: PVC, die Schlagfestigkeit erhöhende Zusätze, Stabilisatoren, Phosphit, epoxidiertes Sojaöl, 12-Hydroxystearinsäure, Stearylstearat, Antioxidans, Titandioxid, Füllstoffe (wie z.B. CaCO₃).

### Beschichtungsmassen

Nach DIN 8580 versteht man unter Beschichten ein Fertigungsverfahren zum Aufbringen einer fest haftenden Schicht aus formlosem Stoff auf ein Werkstück oder eine Trägerbahn.
Als Beschichtungsmassen dienen meist Thermoplaste oder - in geringem Maße - Elastomere. Die größte Bedeutung unter den Thermoplasten haben die PVC-Pasten. Bei den PVC-Pasten unterscheidet man die am meisten eingesetzten Plastisole und die Organosole, letztere sind hier nicht relevant.
Die Beschichtungsmassen werden durch Einrühren von pulverförmigen PVC-Pastentypen (meist auf Emulsion-, gelegentlich auch auf Suspension-PVC-Basis) und Additiven (Stabilisatoren), Pigmenten und Füllstoffen in Weichmacher hergestellt. Die erfolgt durch Mischen oder Dispergieren in entsprechenden Aggregaten.
Eine detaillierte Beschreibung der Herstellung findet sich in "Polymere Werkstoffe-Band III, Technologie 2, von Hans Batzer, Georg Thieme Verlag, Stuttgart, Ausgabe 1984, Seite254ff"
Die auf diese Weise hergestellten Fußbodenbeläge und Kunstlederbeschichtungen werden oftmals durch weitere Oberflächenbehandlung, wie z.B. Prägung von bestimmtem Design, mit Hilfe von Prägewalzen und/oder auch Überlackierung im Flachdruck- oder Tiefdruckverfahren weiterverarbeitet.
Bedingt durch diese anschließende Weiterverarbeitung ist es sinnvoll, die bisher verwendeten inneren und äußeren Gleitmittel durch den erfindungsgemäßen Partialester zu ersetzen, um somit die Vorteile der besseren Überlackierbarkeit, bzw. Bedruckbarkeit zu nutzen.
Hierzu werden bei der Mischung, bzw. Dispergierung lediglich die inneren und äußeren Gleitmittel durch das erfindungsgemäße Prozesshilfsmittel ausgetauscht. Ebenso zeigt sich hier eine verbesserte Oberflächenqualität, hinsichtlich Glätte und Glanz, sowie ein zusätzlicher Effekt in der Homogenisierung bei der Einfärbung mit Pigmenten. Dieser Effekt ist besonders für die Anwendungen bei denen nicht lackiert werden soll von Vorteil.
Bei der Verwendung von Prägepapieren (z.B. Lederimitationen), beim Transferverfahren, erweist es sich als vorteilhaft den erfindungsgemäßen Partialester zu verwenden, da sich der Verwendungszyklus dieser meist sehr teuren Prägepapiere deutlich erhöht.

Verschiedene erfindungsgemäße und Vergleichsformulierung aus dem Bereich der Weich-PVC-Plastisolformulierungen sind im Abschnitt "Beispiele" unter dem Punkt "Verwendungsbeispiele - Verwendungsbeispiel 1" aufgeführt

### Duroplaste (Pressmassen)

Pressmassen enthalten im allgemeinen folgende Substanzen:
Reaktive Harze, Härter, evtl. Beschleuniger (diese Mischung wird oft auch als Bindemittelmatrix bezeichnet)
Füllstoffe und oder Verstärkungsstoffe, Gleit- und Trennmittel, Pigmente und/oder Farbstoffe, sonstige Zusätze, z.B. Stabilisatoren, Flexibilisatoren, Härtungsverzögerer und nicht reaktive Harze.

Als Füllstoffe dienen hauptsächlich, Kreide (CaCO₃), ATH, Quarzmehl, Gesteinsmehl, Wollastonit, Glimmer, als Verstärkungsstoffe, Glasfasern; synthetische organische Stoffe (wie z.B. synthetische Fasern, Polyester, Polyamide, Aramide), Kohlenstoff-Fasern (C-Fasern); natürliche organische Stoffe (wie z.B. Holzmehl und Zellstoff).
Die Verarbeitung solcher Pressmassen ist in, "Polymere Werkstoffe- Band III, Technologie 2, von Hans Batzer, Georg Thieme Verlag, Stuttgart, Ausgabe 1984, Seite 224ff" detailliert erfasst.

Als Beispiel seien UP-Formmassen genannt, insbesondere faserverstärkte Pressmassen, wie sie detailliert beschrieben werden in "Polymere Werkstoffe- Band III, Technologie 2, von Hans Batzer, Georg Thieme Verlag, Stuttgart, Ausgabe 1984, Seite 235ff". Diese faserverstärkten Pressmassen in Plattenform (auch als Sheet Molding Compounds SMC bezeichnet) unterteilen sich nochmals in die Gruppen LS (Low Shrink) und LP (Low Profile). Unter LP-Systemen versteht man Compounds, die zu einer weitgehenden Kompensation der Schwindung (Schrumpf) führen. Die LS-Systeme, die hinsichtlich der Schwindungskompensation die LP-Harze nicht erreichen, sind dafür jedoch wesentlich besser einfärbbar. Wenn SMC-Formteile nachträglich lackiert werden sollen, wie z.B. bei Karosserieteilen, zieht man LP-Systeme vor. Auch hier erweist es sich als sinnvoll, bedingt durch die anschließende Weiterverarbeitung, die bisher verwendeten inneren und äußeren Gleitmittel durch den erfindungsgemäßen Partialester zu ersetzen, um somit die Vorteile der besseren Überlackierbarkeit bzw. Bedruckbarkeit zu nutzen.
Hierzu werden bei der Mischung, bzw. Dispergierung lediglich die inneren und äußeren Gleitmittel durch das erfindungsgemäße Prozesshilfsmittel ausgetauscht. Es zeigt sich außerdem eine bessere Stabilisierung der Compounds, ohne das der den LS- und LP-Komponenten zugeschriebene Schwindungseffekt benachteiligt wird. Ebenso zeigt sich hier eine verbesserte Oberflächenqualität, hinsichtlich Glätte und Glanz, sowie ein zusätzlich Effekt in der Homogenisierung bei der Einfärbung. Dieser Effekt ist besonders für die Anwendungen bei denen nicht lackiert werden soll von Vorteil.

Verschiedene erfindungsgemäße und Vergleichsformulierungen aus dem Bereich der Duroplaste und SMC-Fertigung sind im Abschnitt "Beispiele" unter der Rubrik "Verwendungsbeispiele - Verwendungsbeispiel 2 und Verwendungsbeispiel 3" aufgeführt.

Im folgenden Abschnitt "Beispiele" wird zur Verdeutlichung der Erfindung die Herstellung verschiedener erfindungsgemäßer und nicht-erfindungsgemäßer Trennmittel, sowie deren anwendungstechnische Eignung gezeigt.

### Beispiele

### Herstellungsbeispiele

Allgemeine Herstellvorschrift zu den in der folgenden Tabelle aufgeführten Herstellungsbeispielen

Die Komponenten 1 und 2 werden im angegebenen Verhältnis in ein geeignetes Reaktionsgefäß eingewogen und unter N₂-Gas und Rühren auf ca. 80°C erwärmt. Die Komponente 3 wird dazugegeben und die Mischung anschließend unter N₂-Gas auf die angegebene Temperatur aufgeheizt. Entstehendes Reaktionswasser wird gegebenenfalls über einen Wasserabscheider abgeschieden. Der Fortschritt der Reaktion wird über die Bestimmung der Säurezahl kontrolliert. Es wird so lange bei der angegebenen Temperatur gerührt, bis die angegebene Säurezahl erreicht ist. Anschließend wird abgekühlt und abgefüllt.

Unter anderem werden folgende Substanzen eingesetzt:
· Pripol 1022 ist eine C36-Dimersäure von Unichema
· Pripol 1009 ist eine hydrierte C36-Dimersäure von Unichema
· Pripol 1040 ist eine C54-Trimersäure von Unichema
· Bei dem MSA/ Fettsäure-Addukt aus Beispiel 17 handelt es sich um ein Addukt von 1 mol Maleinsäureanhydrid an eine konjugierte ungesättigte C18-Fettsäuremischung
· MPEG 350 ist ein Methoxypolyethylenglykol mit einem mittleren Molekulargewicht von 350 g/mol
· MPEG 500 ist ein Methoxypolyethylenglykol mit einem mittleren Molekulargewicht von 500 g/mol
· MPEG 750 ist ein Methoxypolyethylenglykol mit einem mittleren Molekulargewicht von 750 g/mol
· Polyglykol B11/50 ist ein Butanol-gestarteter EO/PO Polyether (EO: PO =1:1) mit einem mittleren Molekulargewicht von 1020 g/mol
· Lutensol ON 50 ist ein Oxoalkohol-gestarteter EO-Polyether mit einem mittleren Molekulargewicht von 400 g/mol

| **Herstellungsbeispiele** | | | | | | | | | |
|---|---|---|---|---|---|---|---|---|---|
| **Beispiel** | **Komponente 1** | **Gewichts-Anteil K1** | **umgesetzte Säuregruppen in %** | **Komponente2** | **Gewichts-Anteil K2** | **Komponente 3** | **Gewichts-Anteil K3** | **Reaktions- temperatur [°C]** | **Säurezahl [mg KOH/g]** |
| 1 | Pripol 1022 | 89,4 | 45 | Butanol | 10,1 | p-Toluolsulfonsäure | 0,5 | 190 | 94 |
| 2 | Pripol 1022 | 72,3 | 40 | Oleylalkohol | 26,7 | Dodecylbenzolsulfonsäure | 1 | 150 | 85 |
| 3 | Pripol 1022 | 74,7 | 35 | Stearylalkohol | 24,3 | Dodecylbenzolsulfonsäure | 1 | 150 | 94 |
| 4 | Pripol 1022 | 72,7 | 30 | MPEG 350 | 26,3 | Dodecylbenzolsulfonsäure | 1 | 180 | 99 |
| 5 | Pripol 1022 | 82,5 | 15 | Lutensol ON50 | 17 | p-Toluolsulfonsäure | 0,5 | 180 | 136 |
| 6 | Pripol 1022 | 91,4 | 20 | 2-Ethylhexanol | 8,1 | p-Toluolsulfonsäure | 0,5 | 140 | 142 |
| 7 | Pripol 1022 | 81 | 50 | 2-Ethylhexanol | 18,5 | p-Toluolsulfonsäure | 0,5 | 140 | 78 |
| 8 | Pripol 1022 | 73,3 | 80 | 2-Ethylhexanol | 26,2 | p-Toluolsulfonsäure | 0,5 | 140 | 28 |
| 9* | Pripol 1022 | 68,7 | 100 | 2-Ethylhexanol | 30,8 | p-Toluolsulfonsäure | 0,5 | 140 | 0 |
| 10 | Pripol 1009 | 84,8 | 50 | Hexenol | 14,7 | p-Toluolsulfonsäure | 0,5 | 140 | 83 |
| 11 | Pripol 1009 | 47,8 | 30 | Polyglykol B11/50 | 51,2 | Tetraisopropylorthotitanat | 1 | 180 | 66 |
| 12 | Pripol 1040 | 74,9 | 25 | Lutensol ON 50 | 24,4 | p-Toluolsulfonsäure | 0,7 | 180 | 104 |
| 13 | Tetrapropenylbernsteinsäureanhydrid | 49,9 | 50 | Oleylalkohol | 49,9 | p-Toluolsulfonsäure | 0,2 | 120 | 105 |
| 14 | Pripol 1009 | 73,8 | 20 | MPEG 500 | 25,7 | p-Toluotsulfonsäure | 0,5 | 180 | 116 |
| 15 | Pripol 1040 | 62,3 | 90 | Isotridecylalkohol | 37,2 | p-Toluolsulfonsäure | 0,5 | 170 | 12 |
| 16 | Pripol 1040 | 79,8 | 10 | MPEG 750 | 19,5 | p-Toluolsulfonsäure | 0,7 | 180 | 133 |
| 17 | MSAI Fettsäure-Addukt | 52,8 | 50 | Oleylalkohol | 46,2 | Dodecylbenzolsulfonsäure | 1 | 170 | 97 |
| 18 | Phthalsäure | 54,9 | 25 | Stearylalkohol | 44,6 | Kaliumcarbonat | 0,5 | 160 | 280 |
| 19 | Trimellitsäureanhydrid | 44 | 30 | Oleylalkohol | 55,3 | Kaliumcarbonat | 0,7 | 150 | 272 |
| 20 | Pripol 1022 | 75,4 | 50 | Ethylhexylglycidether | 24,1 | p-Toluolsulfonsäure | 0,5 | 160 | 73 |

| | | | | | | | | | |
|---|---|---|---|---|---|---|---|---|---|
| *: nicht erfindungsgemäßes Vergleichsbeispiel | | | | | | | | | |

### VERWENDUNGSBEISPIELE

### Verwendungsbeispiel 1

Die in der nachfolgenden Tabelle angegebenen Plastisol-Zusammensetzungen wurden hergestellt, indem die Bestandteile in üblicher Weise in einem Mischer homogenisiert wurden.

### WEICH-PVC PLASTISOLFORMULIERUNG

### (Mengenangaben in Gewichts-Teilen)

| **Verwendungsbeispiel** | **1a*** | **1b*** | **1c** | **1d*** |
|---|---|---|---|---|
| DINP (Diisodecylphthalat) | 275 | 275 | 275 | 275 |
| Butylzinnmercaptid, | 2,5 | 2,5 | 2,5 | 2,5 |
| (Tinstab BTS 61 von Akzo Nobel) | | | | |
| Stabilisatorzubereitung auf Calcium/ Zinkcarboxylat Basis (Lankromark LZC 184 von Akzo Nobel) | 5 | 5 | 5 | 5 |
| TiO2, Rutil Typ, | 100 | 100 | 100 | 100 |
| (Kronos 2300 von Kronos) | | | | |
| Calciumcarbonat | 285 | 285 | 285 | 285 |
| (Calcilit 8G von Alpha Calcit) | | | | |
| Alkylphenolethoxylat | 7,5 | 7,5 | 7,5 | 7,5 |
| (Lankroplast V2023 von Akzo Nobel) | | | | |
| lsoparaffin Fraktion, | 50 | 50 | 50 | 50 |
| Kp 186-204°C | | | | |
| (Isopar J von ExxonMobil) | | | | |
| Mikrosuspensions-PVC, | 500 | 500 | 500 | 500 |
| K-Wert 71 (Evipol MP 7151 der European Vinyl Corp.) | | | | |
| C36-Dimersäure * | | 5 | | |
| (Pripol 1022 von Unichema) | | | | |
| Herstellungsbeispiel 7 | | | 5 | |
| Herstellungsbeispiel 9* | | | | 5 |
| **Ergebnisse:** | | | | |
| Oberflächenspannung ¹⁾ [mN/m] | 44,5 | 46,0 | 52,1 | 44,5 |
| Entformbarkeit ²⁾ | sehr schlecht | gut | sehr gut | sehr schlecht |
| Vergilbung | keine | stark | gering | keine |

| | | | | |
|---|---|---|---|---|
| *: nicht erfindungsgemäß Da die Benetzbarkeit und Haftung bei Überlackierung im wesentlichen von der Polarität des Untergrundes abhängen, wurde die Oberflächenspannung der Formulierungen 1a-1d bestimmt. ¹⁾ : Zur Messung der Oberflächenspannung wurden die Plastisole in einem Mathis-Ofen mit 200µm Nassschichtdicke, 2 Minuten bei 200°C ausgeliert. Dabei zeigte die mit der unveresterten Dimersäure hergestellte nicht erfindungsgemäße Formulierung 1 b im Gegensatz zu den anderen Proben eine starke Vergilbung aufgrund des hohen Carboxylgruppengehaltes. Die Oberflächenspannung wurde mit einem Krüss Oberflächenspannungsmessgerät G2 gemessen. Hierzu wurden Wasser, Glycerin, Ethylenglykol, 1-Oktanol sowie n-Dodekan als Referenz / Prüfflüssigkeiten verwendet. Die mit Abstand höchste Oberflächenspannung und damit beste Überlackierbarkeit wurde bei der erfindungsgemäßen Formulierung 1c gefunden. Im Gegensatz dazu zeigten die Vergleichsformulierungen 1b und 1c mit unveresterter, beziehungsweise vollveresterter Dicarbonsäure keine, beziehungsweise nur eine geringfügige Erhöhung der Oberflächenspannung ²⁾ : Zur Prüfung der Entformbarkeit wurden die Plastisole mit einer Nassschichtdicke von 1000 µm auf ein Gradientenofenblech aufgezogen. Hierin wurde ein Shuller SH60/12 Glasvlies eingelegt. Das Vlies wurde mit einer Gummiwalze eingedrückt. Anschließend wurden die Bleche in einem Gradientenofen mit einem Temperaturgradienten von 180 bis 220°C und einer Einbrennzeit von 2 Minuten eingebrannt. Unmittelbar nach dem Einbrennen wurde das Glasvlies vom Blech abgezogen und die anhaftende Rest - PVC-Menge beurteilt. | | | | |

### Verwendungsbeispiel 2

### DUROPLASTE / HÄRTBARE PRESSMASSEN - SMC-FERTIGUNG

Die in der nachstehenden Tabelle angegebenen SMC-Formulierungen wurden hergestellt, indem zuerst alle flüssigen Bestandteile mittels einer Dissolvers homogenisiert und anschließend alle Feststoffe untergemischt wurden.

| **TESTREZEPTUR ELEKTROGRAU- RAL 7032** | | | | | | | | |
|---|---|---|---|---|---|---|---|---|
| **Verwendungsbeispiel** | **2a*** | **2b*** | **2c** | **2d*** | **2e*** | **2f*** | **2g** | **2h*** |
| Harz 1 | 70,00 | 70,00 | 70,00 | 70,00 | 70,00 | 70,00 | 70,00 | 70,00 |
| Palapreg P17-02 | | | | | | | | |
| Standardglykol -Phthalsäure- Harz (35%ig in Styrol) | | | | | | | | |
| Harz 2 | 30,00 | 30,00 | 30,00 | 30,00 | 30,00 | 30,00 | 30,00 | 30,00 |
| Palapreg H 814-01 | | | | | | | | |
| Polystyrol (33%ig in Styrol) | | | | | | | | |
| Pigmentpaste in monomerfreiem Polyesterharz, | 10,00 | 10,00 | 10,00 | 10,00 | 10,00 | 10,00 | 10,00 | 10.00 |
| Brohl Chemie, Elektrograu RAL 7032 - 65 L (a.V.) | | | | | | | | |
| tert-Butylperoxy benzoat Härter (Trigonox C von Akzo) | 1,50 | 1,50 | 1,50 | 1,50 | 1,50 | 1,50 | 1,50 | 1,50 |
| 2,6-Di-tert-butyl4-methylphenol Inhibitor (lonol CP) | 0,10 | 0,10 | 0,10 | 0,10 | 0,10 | 0.10 | 0,10 | 0,10 |
| Füllstoff 1 | 50,00 | 50,00 | 50,00 | 50,00 | 50,00 | 50,00 | 50,00 | 50,00 |
| Kreide(Millicarb OG) | | | | | | | | |
| Füllstoff 2 | 120,00 | 120,00 | 120,00 | 120,00 | 120,00 | 120,00 | 120,00 | 120,00 |
| Al(OH)₃ (Martinal ON 921) | | | | | | | | |
| PE Pulver | 5,00 | 5,00 | 5,00 | 5,00 | 5,00 | 5,00 | 5,00 | 5,00 |
| Coathylene HA 1681 | | | | | | | | |
| Luvatol MK 35 NV (35%iges MgO in monomerfreiem UP Harz | 2,00 | 2,00 | 2,00 | 2,00 | 2,70 | 2,70 | 2,70 | 2,70 |
| Zn-stearat* | 4,00 | | | | 4,00 | | | |
| C36-Dimersäure (Pripol 1022 von Unichema)* | | 3.00 | | | | 3.00 | | |
| Herstellungsbeispiel 7 | | | 3,00 | | | | 3,00 | |
| Herstellungsbeispiel 9 * | | | | 3,00 | | | | 3,00 |
| **Ergebnisse Eindickverhalten:** | | | | | | | | |
| Viskosität [Pa.s] nach | | | | | | | | |
| 3 Tagen Lagerung | 120.000 | 70.000 | 110.000 | 120.000 | 150.000 | 75.000 | 150.000 | 150.000 |
| 5 Tagen Lagerung | 150.000 | 80.000 | 140.000 | 150.000 | >160.000 | 100.000 | >160.000 | >160.000 |
| 8 Tagen Lagerung | >160.000 | 90.000 | >160.000 | >160.000 | >160.000 | 105.000 | >160.000 | >160.000 |

| | | | | | | | | |
|---|---|---|---|---|---|---|---|---|
| *: nicht erfindungsgemäße Vergleichsbeispiele | | | | | | | | |

Zur Prüfung des Eindickverhaltens wurde bei den nach der vorstehenden Tabelle hergestellten Compounds nach Lagerung bei 20°C die Viskosität mit einem Brookfield Viskosimeter gemessen (DVII, Spindel TF bei 0,5 UPM).
Die Proben 2a, 2c und 2d zeigten ein im Rahmen der üblichen technischen Schwankungen gleiches Eindickniveau, während die mit der unveresterten Dicarbonsäure hergestellte Formulierung 2b eine deutlich negative Beeinträchtigung des Eindickniveaus zeigte.
Das gleiche Bild ergibt sich bei den mit erhöhter MgO-Menge hergestellten Formulierungen 2e-h. Demnach lässt sich auch durch die Erhöhung des MgO-Anteils der negative Einfluss der unveresterten Dicarbonsäure (siehe Vergleichsformulierung 2f) nicht ausgleichen.

Mit den Formulierungen 2a-d wurden auf einer SMC-Versuchsanlage der Firma Schmidt und Heinzmann SMC-Prepregs hergestellt, indem die Harzmasse zwischen zwei Polyamid-Trägerfolien aufgebracht wurde. (Bandgeschwindigkeit: 5,5 m/min; Rakelspalt: 1,6 mm; Flächengewicht: 4000 g/m2; verwendete Glassorte: OC RO7 4800 tex von Owns Corning; Glasgehalt: 97 Gewichtsteile, das entspricht 25 Gewichts% auf die Gesamtformulierung).

Für die weitere Verarbeitung nach erfolgter Eindickung müssen sich die Trägerfolien vor dem Pressvorgang gut von den Harzmatten abziehen lassen und die Prepregs selbst sollen möglichst trocken und klebfrei sein. Als Beurteilungskriterium wurde auch das Aussehen der abgezogenen Folie herangezogen, die möglichst transparent und ohne Harzanhaftungen sein sollte.
Nach einer Lagerzeit von 5 Tagen bei Raumtemperatur wurden die eingedickten SMC-Prepregs zu Stücken von 860g ausgeschnitten, die Trägerfolie wurde abgezogen und deren Aussehen bewertet.

### Bewertung der Handhabbarkeit der Pregpregs, vor dem Pressvorgang

| **Formulierung** | **Prepregoberfläche** | **Folienaussehen** |
|---|---|---|
| **2a*** | trocken, leicht klebrig | stark trübe mit erheblichen Compoundanhaftungen |
| **2b*** | stark klebrig | stark trübe mit erheblichen Compoundanhaftungen |
| **2c** | trocken, nicht klebrig | transparent, ohne Compoundanhaftungen |
| **2d*** | stark klebrig | milchig mit deutlichen Compoundanhaftungen |

| | | |
|---|---|---|
| *: nicht erfindungsgemäße Vergleichsbeispiele | | |

Bei der erfindungsgemäßen Formulierung 2c war eine besonders leichte und klebfreie Entfernung der Trägerfolie ohne Fädenziehen (cob webbing) möglich.

### Prüfung von Trennwirkung, Farbhomogenität und Oberflächenqualität nach dem Verpressen

Die von der Trägerfolie befreiten SMC-Stücke wurden mit einer Formauslegung von 40% zu Prüfplatten verpresst. Dabei wurde eine Temperatur von 150 bis 155°C, eine Presszeit von 180s und ein Stempeldruck von 1200kN verwandt.
Anschließend wurden die fertig verpressten Platten visuell hinsichtlich Farbhomogenität und Oberflächenqualität beurteilt.
Zur Bewertung der Oberflächenqualität wurde die zu prüfende Platte zusammen mit einer Vergleichsplatte leicht schräg zum Fenster gehalten. Es wurde bewertet, wie klar sich Objekte in der Probenoberfläche spiegeln konnten.

| **Formulierung** | **Beurteilung der Entformung** | **Farbhomogenität** | **Oberflächenqualität** |
|---|---|---|---|
| **2a*** | In Ordnung | schlecht, starke Marmorierung | schlecht, matt |
| **2b*** | In Ordnung | schlecht, starke Marmorierung | geringfügig besser als 2a |
| **2c** | In Ordnung | geringe Marmorierung, beste Homogenität | glänzend |
| **2d*** | schlecht, Risse in den Platten | Bewertung nicht möglich, da starke Oberflächenstörungen durch Mattierungen Anhaftungen / Risse | |

| | | | |
|---|---|---|---|
| *: nicht erfindungsgemäße Vergleichsbeispiele | | | |

Die mit den Vergleichsformulierungen 2a und 2b hergestellten Prüfplatten zeigten eine schlechte Farbhomogenität, die hier deutlich erkennbaren Glasfaserstrukturen führten zu starken Marmorierungseffekten. Darüber hinaus war die Oberfläche matt. Die mit der erfindungsgemäßen Formulierung 2c hergestellten Prüfplatten zeigten dagegen einen insgesamt deutlich verbesserten optischen Eindruck, der sich aufgrund einer ruhigeren, glänzenderen Oberfläche und einer besseren Farbhomogenität mit deutlich weniger Marmorierungseffekten ergab.

### Prüfung der Überlackierbarkeit

Die SMC-Platten wurden mit einem handelsüblichen 2-Komponenten-Autoreparaturlack auf Isocyanat-Basis Acryl lackiert.
Gewichts-Verhältnis: Lack : Härter = 2:1
*Lack-Rezeptur:*
*Spies Hecker-Permacron Mischlack, Serie 257 AG201 Weiss (=Stammlack)*
*Spies Hecker-Permacron MS Härter plus 3040 kurz*
*2 GWT Stammlack : 1 GWT Härter*

Die SMC-Platten wurden mit einer Schichtdicke (trocken) von 45 bis 50 µm lackiert und nach dem Ablüften ca. 24° h bei 80°C gelagert. Anschließend wurden die Platten zur Haftungsprüfung einem Gitterschnitt-Test unterzogen. (Bewertungsskala von Gt0 bis Gt5: Gt0 = gute Lackhaftung, Gt5 = schlechte Lackhaftung)

### Ergebnisse der Haftungsprüfung

| **Formulierung** | **Gitterschnitt** |
|---|---|
| **2a*** | Gt5 |
| **2b*** | Gt4 |
| **2c** | Gt1 |
| **2d*** | NICHT GEPRÜFT |

| | |
|---|---|
| *: nicht erfindungsgemäße Vergleichsbeispiele | |

Die mit der erfindungsgemäßen Formulierung 2c hergestellten Prüfplatten zeigten eine im Vergleich zu den Vergleichsformulierungen 2a und 2b wesentlich verbesserte Lackhaftung. Die Platten der Vergleichsformulierung 2d konnten nicht zur Prüfung der Überlackierbarkeit herangezogen werden, da die Oberflächenbeschaffenheit auf Grund der mangelhaften Entformung zu schlecht war.

### Verwendungsbeispiel 3

Es wurde die gleiche Testrezeptur wie in Verwendungsbeispiel 2 verwendet, bei der jetzt statt der Elektrograu RAL 7032 Pigmentpaste eine kobaltblaue Pigmentpaste der Fa. Frei Lacke, Emil Frei GmbH & Co, Lackfabrik, Durelastik Farbpaste, VP BÜ 1232 verwendet wurde.
Auch hier wurde mit der erfindungsgemäßen Formulierung die mit Abstand beste Oberflächenqualität und Homogenität erreicht.

## Patentansprüche

1. Verwendung von Partialestern als. Prozeßhilfsmittel bei der Verarbeitung von Kunststoffmassen, wobei die Partialester mindestens 18 C-Atome enthalten, ein zahlenmittleres Molekulargewicht von 300 bis 10000 aufweisen und durch die Umsetzung von gesättigten oder ungesättigten aliphatischen und/oder cycloaliphatischen Polycarbonsäuren oder deren Anhydriden mit gesättigten oder ungesättigten aliphatischen, cycloaliphatischen und/oder aromatischen Monoalkoholen und/oder Monoepoxiden herstellbar sind, wobei mindestens 10 % und maximal 90 % der Carboxylgruppen der Polycarbonsäuren umgesetzt sind und die Polycarbonsäuren oder deren Anhydride 8 bis 100 C-Atome enthalten und wobei der Anteil der Partialester an den Kunststoffmassen 0,05 bis 10 Gew.-% beträgt.

2. Verwendung nach Anspruch 1, wobei die Polycarbonsäuren zwei bis vier Carbonsäuregruppen enthalten.

3. Verwendung nach Anspruch 1 oder 2, wobei die Polycarbonsäuren durch Polymerisation von ungesättigten Fettsäuren erhältliche Dimer- oder Trimersäuren mit 30 bis 60 C-Atomen sind.

4. Verwendung nach Anspruch 1 bis 3, wobei die Partialester eine Säurezahl von mindestens 10 mg KOH/g aufweisen.

5. Verwendung nach Anspruch 1 bis 4, wobei die Monoalkohole und/oder Monoepoxide Ethergruppen enthalten.

6. Verwendung nach Anspruch 1 bis 5 bei der Verarbeitung von thermoplastischen Kunststoffmassen.

7. Verwendung nach Anspruch 6 bei der Verarbeitung von Kunststoffmassen, die auf Polyvinylchlorid, Polyvinylidenchlorid, Polyethylen, Polypropylen, Polyamid, Polycarbonat, Polystyrol, Poly(meth)acrylat, Polyester, Ethylen-Vinylacetat-Copolymeren, Polyacrylnitril, Pfropf- oder Copolymeren aus Vinylchlorid und Vinylacetat oder Mischungen der angegebenen Thermoplasten basieren.

8. Verwendung nach Anspruch 7, wobei die Kunststoffmassen auf Weich-PVC oder Pasten-PVC basieren.

9. Verwendung nach Anspruch 1 bis 5 bei der Verarbeitung von duroplastischen Kunststoffmasse.

10. Verwendung nach Anspruch 9, wobei es sich um ungesättigte Polyesterharzsysteme, Polyurethansysteme, härtbare (Meth)Acrylatharzsysteme oder Mischungen davon handelt.

11. Verwendung nach Anspruch 10, wobei es sich bei den ungesättigten Polyesterharzsystemen um ungesättigte Polyesterharzsystem-Formmassen handelt.

12. Verwendung nach Anspruch 11, wobei es sich bei den Formmassen um Sheet Moulding Compounds, Bulk Moulding Compounds, Dough Moulding Compounds oder Thick Moulding Compounds handelt.

13. Verwendung nach Anspruch 1 bis 12 bei der Verarbeitung von Kunststoffmassen durch Spritzen, Pressen, Extrudieren, Beschichten, Gießen, Kalandrieren, Imprägnieren, Schäumen oder Profilziehen.

14. Kunststoffmassen enthaltend bezogen auf ihr Gesamtgewicht 0,05 bis 10 Gew.-% Partialester, die mindestens 18 C-Atome enthalten, ein zahlenmittleres Molekulargewicht von 300 bis 10000 aufweisen und durch die Umsetzung von gesättigten oder ungesättigten aliphatischen und/oder cycloaliphatischen Polycarbonsäuren oder deren Anhydriden mit gesättigten oder ungesättigten aliphatischen, cycloaliphatischen und/oder aromatischen Monoalkoholen und/oder Monoepoxiden herstellbar sind, wobei mindestens 10 % und maximal 90 % der Carboxylgruppen der Polycarbonsäuren umgesetzt sind und die Polycarbonsäuren oder deren Anhydride 8 bis 100 C-Atome enthalten.

15. Kunststoffmassen nach Anspruch 14, die zusätzlich Füllstoffe, Wärmestabilisatoren, Lichtschutzmitttel, Antistatika, Flammschutzmittel, Verstärkungsstoffe, Pigment- und/oder Farbstoffe, Verarbeitungshilfsmittel, Gleit- und Trennmittel, Schlagzähmacher, Antioxidantien, Treibmittel oder optische Aufheller enthalten.

## Claims

1. Use of partial esters as processing aids in the processing of synthetic polymer compositions, where the partial esters contain at least 18 carbon atoms, have a number-average molecular weight of from 300 to 10 000, and can be prepared by the reaction of saturated or unsaturated aliphatic and/or cycloaliphatic polycarboxylic acids or anhydrides of these with saturated or unsaturated aliphatic, cycloaliphatic and/or aromatic monoalcohols and/or monoepoxides, where at least 10% and not more than 90% of the carboxyl groups of the polycarboxylic acids have been reacted and the polycarboxylic acids and anhydrides of these contain from 8 to 100 carbon atoms and where the proportion of the partial esters, based on the synthetic polymer compositions, is from 0.05 to 10% by weight.

2. Use according to Claim 1, where the polycarboxylic acids contain from 2 to 4 carboxylic acid groups.

3. Use according to Claim 1 or 2, where the polycarboxylic acids are dimer or trimer acids having from 30 to 60 carbon atoms and obtainable by polymerization of unsaturated fatty acids.

4. Use according to any of Claims 1 to 3, where the partial esters have an acid value of at least 10 mg KOH/g.

5. Use according to any of Claims 1 to 4, where the monoalcohols and/or monoepoxides contain ether groups.

6. Use according to any of Claims 1 to 5 in the processing of thermoplastic synthetic polymer compositions.

7. Use according to Claim 6 in the processing of synthetic polymer compositions based on polyvinyl chloride, on polyvinylidene chloride, on polyethylene, on polypropylene, on polyamide, on polycarbonate, on polystyrene, on poly(meth)acrylate, on polyester, on ethylene-vinyl acetate copolymers, on polyacrylonitrile, on graft polymers of vinyl chloride and vinyl acetate, on copolymers of vinyl chloride and vinyl acetate, or mixtures of the stated thermoplastics.

8. Use according to Claim 7, where the synthetic polymer compositions are based on plasticized PVC or on paste PVC.

9. Use according to any of Claims 1 to 5 in the processing of thermoset synthetic polymer compositions.

10. Use according to Claim 9, where these are unsaturated polyester resin systems, polyurethane systems, curable (meth)acrylate resin systems, or mixtures of these.

11. Use according to Claim 10, where the unsaturated polyester resin systems are unsaturated polyester resin system moulding compositions.

12. Use according to Claim 11, where the moulding compositions are sheet moulding compounds, bulk moulding compounds, dough moulding compounds or thick moulding compounds.

13. Use according to any of Claims 1 to 12 in the processing of synthetic polymer compositions by injection, compression, extrusion, coating, casting, calendering, impregnation, foaming or pultrusion.

14. Synthetic polymer compositions comprising, based on their total weight, from 0.05 to 10% by weight of partial esters which contain at least 18 carbon atoms, have a number-average molecular weight of from 300 to 10 000, and can be prepared by the reaction of saturated or unsaturated aliphatic and/or cycloaliphatic polycarboxylic acids or anhydrides of these with saturated or unsaturated aliphatic, cycloaliphatic and/or aromatic monoalcohols and/or monoepoxides, where at least 10% and not more than 90% of the carboxyl groups of the polycarboxylic acids have been reacted and the polycarboxylic acids and anhydrides of these contain from 8 to 100 carbon atoms.

15. Synthetic polymer compositions according to Claim 14, which also comprise fillers, heat stabilizers, light stabilizers, antistats, flame retardants, reinforcing materials, pigments and/or dyes, processing auxiliaries, lubricants and release agents, impact modifiers, antioxidants, blowing agents or optical brighteners.

## Revendications

1. Utilisation d'esters partiels en tant qu'agents auxiliaires de procédé dans le traitement de masses de matière plastique, les esters partiels contenant au moins 18 atomes de carbone, présentant un poids moléculaire moyen en nombre de 300 à 10 000 et pouvant être obtenus par la réaction d'acides polycarboxyliques saturés ou non saturés aliphatiques et/ou cycloaliphatiques ou de leurs anhydrides avec des monoalcools saturés ou non saturés aliphatiques, cycloaliphatiques et/ou aromatiques et/ou des monoépoxydes, au moins 10 % et au maximum 90 % des groupes carboxyle des acides polycarboxyliques étant mis en réaction et les acides polycarboxyliques ou leurs anhydrides contenant 8 à 100 atomes de carbone et la part des esters partiels dans les masses de matière plastique étant de 0,05 à 10 % en poids.

2. Utilisation selon la revendication 1, les acides polycarboxyliques contenant deux à quatre groupes acide carboxylique.

3. Utilisation selon la revendication 1 ou 2, les acides polycarboxyliques étant des acides dimères ou trimères présentant 30 à 60 atomes de carbone pouvant être obtenus par polymérisation d'acides gras non saturés.

4. Utilisation selon les revendications 1 à 3, les esters partiels présentant un indice d'acidité d'au moins 10 mg de KOH/g.

5. Utilisation selon les revendications 1 à 4, les monoalcools et/ou les monoépoxydes contenant des groupes éther.

6. Utilisation selon les revendications 1 à 5 dans le traitement de masses de matière plastique thermoplastiques.

7. Utilisation selon la revendication 6 dans le traitement de masses de matière plastique qui sont basées sur du chlorure de polyvinyle, chlorure de polyvinylidène, polyéthylène, polypropylène, polyamide, polycarbonate, polystyrène, poly(méth)acrylate, polyester, copolymères éthylène-acétate de vinyle, polyacrylonitrile, polymères implantés ou copolymères de chlorure de vinyle et d'acétate de vinyle ou des mélanges des matières thermoplastiques indiquées.

8. Utilisation selon la revendication 7, les masses de matière plastique étant basées sur du PVC mou ou du PVC en pâte.

9. Utilisation selon les revendications 1 à 5 dans le traitement de masses de matière plastique thermodurcissables.

10. Utilisation selon la revendication 9, dans laquelle il s'agit de systèmes de résines polyester non saturés, de systèmes de polyuréthane, de systèmes de résines (méth)acryliques durcissables ou de mélanges de ceux-ci.

11. Utilisation selon la revendication 10, les systèmes de résines polyester non saturés étant des matières à mouler de systèmes de résines polyester non saturés.

12. Utilisation selon la revendication 11, les matières à mouler étant des préimprégnés (Sheet Moulding Compounds), des prémixes (Bulk Moulding Compounds), des prémixes en pâte (Dough Moulding Compounds) ou des prémixes épais (Thick Moulding Compounds).

13. Utilisation selon les revendications 1 à 12 dans le traitement de masses de matière plastique par injection, moulage par pression, extrusion, enduction, formage, calandrage, imprégnation, moussage ou étirage en profil.

14. Masses de matière plastique contenant, par rapport à leur poids total, 0,05 à 10 % en poids d'esters partiels qui contiennent au moins 18 atomes de carbone, présentent un poids moléculaire moyen en nombre de 300 à 10 000 et peuvent être obtenues par la réaction d'acides polycarboxyliques saturés ou non saturés aliphatiques et/ou cycloaliphatiques ou de leurs anhydrides avec des monoalcools saturés ou non saturés aliphatiques, cycloaliphatiques et/ou aromatiques et/ou des monoépoxydes, au moins 10 % et au maximum 90 % des groupes carboxyle des acides polycarboxyliques étant mis en réaction et les acides polycarboxyliques ou leurs anhydrides contenant 8 à 100 atomes de carbone.

15. Masses de matière plastique selon la revendication 14, qui contiennent en supplément des matières de remplissage, stabilisants thermiques, agents de protection contre l'effet de la lumière, antistatiques, agents ignifuges, renforçateurs, pigments et/ou colorants, produits auxiliaires de traitement, agents lubrifiants et agents de démoulage, agents augmentant la résilience, antioxydants, agents d'expansion ou azurants optiques.
